# EUROPEAN PATENT SPECIFICATION

(11) **EP 1 806 489 B1**
(45) Date of publication and mention of the grant of the patent: **14.10.2015**
(21) Application number: 05805305.9
(22) Date of filing: 26.10.2005
(51) Int. Cl.: F02B 39/00, F02C 6/12, F01D 25/24, F01D 25/14, F01D 25/26

(54) **EXHAUST GAS TURBINE SUPERCHARGER**
ABGASTURBINENLADER
TURBOCOMPRESSEUR DE GAZ D'ECHAPPEMENT

(30) Priority: 29.10.2004 JP 2004316907; 08.08.2005 JP 2005229507
(43) Date of publication of application: 11.07.2007
(73) Proprietor: Mitsubishi Heavy Industries, Ltd., Minato-ku Tokyo 108-8215 (JP)
(72) Inventor: TESHIMA, Takanori,MITSUBISHI HEAVY INDUSTRIES, LTD, Nagasaki 8508610 (JP); SIRAISHI, Keiichi,MITSUBISHI HEAVY INDUSTRIES, LTD, Nagasaki 8508610 (JP); IMAKIIRE, Koichiro, MHI MARINE ENGINEERING, LTD., Tokyo 1080014 (JP); AONO, Yoshitsugu, NAGASAKI DESIGNING CO., LTD., Nagasaki 8500062 (JP)
(74) Representative: Henkel, Breuer & Partner
(86) International application number: PCT/JP2005/019704
(87) International publication number: WO 2006/046609

(56) References cited:
- JP-A- 10 103 071
- JP-A- 59 138 728
- JP-A- 63 111 234
- JP-A- 2000 110 576
- JP-U- 56 070 123
- US-A- 2 646 210
- US-A- 4 184 812
- US-A- 5 342 169

## Description

### Technical Field

The present invention relates to a turbocharger that is used for example in combination with a large internal combustion engine such as a marine internal combustion engine, an internal combustion engine for power generation, or the like. In particular, it relates to a turbocharger that charges an internal combustion engine using an axial-flow turbine.

### Background Art

Heretofore, a range of turbochargers has been used in order to improve the output of internal combustion engines. A turbocharger is constructed such that a turbine and a compressor are installed on the same shaft, and has a function of compressing the air supplied to the internal combustion engine to a high density by driving the compressor using the exhaust gas of the internal combustion engine introduced to the turbine side as a power source on the turbine side.

Among these, for a large diesel engine or the like that requires high output, such as for a marine vessel, a power plant, or the like, in contrast to a turbocharger for a vehicle, which is a compact construction using a radial turbine, a turbocharger employing an axial-flow turbine is used. This is because the engine itself is large, and the inlet volume is also very large. Therefore the turbocharger is required to be physically large and have a large capacity, and when compared with a large radial turbine, for which it is difficult to manufacture the airfoil shape and the like, an axial-flow turbine can be manufactured more easily and at low cost.

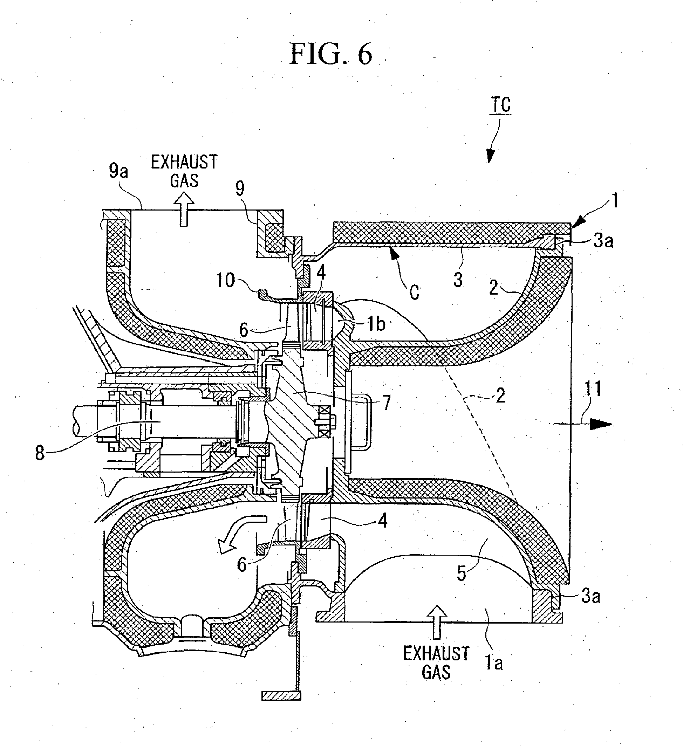

For a conventional turbocharger in which an axial-flow turbine is used, for example there is the one constructed as shown in FIG. 6.

In this turbocharger TC, a gas inlet casing 1 into which exhaust gas is introduced is divided into an inner casing 2 and an outer casing 3. The inner casing 2 and the outer casing 3 form a volute cavity whose cross-sectional area reduces gradually from the outer peripheral side towards the shaft center as they join together, and the cavity becomes an exhaust gas pathway 5, which guides exhaust gas to a turbine nozzle 4. Reference symbol 6 in the figure denotes a turbine rotating blade, 7 denotes a rotor disk, 8 denotes a rotor shaft, 9 denotes a gas outlet casing, and 10 denotes a gas outlet guide sleeve.

In the abovementioned turbocharger TC, the exhaust gas introduced from a gas inlet 1a of the gas inlet casing 1 reaches a gas outlet 1b after traveling about halfway around the exhaust gas pathway 5, and is then ejected from the turbine nozzle 4 towards the turbine rotating blades 6. As a result, the rotor disk 7 and the rotor shaft 8, which are connected to the turbine rotating blades 6, are rotated by the expansion of the high temperature exhaust gas, so that a compressor (omitted in the figure) on the same shaft can be driven by the shaft output to thereby compress the air .

The exhaust gas worked by the expansion in the axial-flow turbine is discharged outside from a gas outlet 9a after flowing into the gas outlet casing 9 from the gas guide sleeve 10 installed in close contact with the turbine nozzle 4.

Furthermore, in the abovementioned turbocharger TC, the inner casing 2 of the gas inlet casing 1, which is divided into two, can be detached and attached in the axial direction (direction indicated by an arrow 11 in the figure) together with the turbine nozzle 4. As a result, the construction is superior for maintenance in that it is possible to perform operations such as internal inspections, removal of foreign objects, and the like, easily, without performing troublesome operations such as detaching the rotor shaft 8 and the like. Moreover, it is also possible to adjust the spacing between the turbine rotating blades 6 and the gas outlet guide sleeve 10 easily. (For example, refer to Patent Document 1)
Patent Document 1: Japanese Examined Patent Application, Publication No. Sho 59-691

### Disclosure of Invention

However, in the aforementioned gas inlet casing 1 with a two-piece housing construction, the high temperature exhaust gas flows through the exhaust gas pathway formed by only the inner casing 2, and there is a region in the outer casing 3 (indicated by arrow C in the figure) that is not thermally influenced by the exhaust gas directly. Furthermore, the inner side casing 2 is bolted for support to a flange face 3a provided on the outer casing 3 such that it faces the right side of the page, which is in the opposite direction from the rotor disk 7, in order that it can be attached to and removed from the gas inlet casing 1 easily.

Accordingly, when compared with a gas inlet casing with a one-piece (unit) construction, there is an advantage in that the inside can be opened easily by simply detaching and attaching the inner casing 2. On the other hand, the following problems occur, which cause difficulty in design.

A first problem is the difference in thermal expansion between the members of the gas inlet casing 1 with a two-piece housing construction. That is, a great difference in thermal expansion between the inner casing 2, which has a high temperature exhaust gas flowing towards it and is thermally influenced directly, and the outer casing 3, which is only influenced indirectly. Such a difference in thermal expansion is prominent especially from when the internal combustion engine starts until a certain operating time has elapsed. As a result, the inner casing 2 extends towards the rotor by thermal expansion. Accordingly, a complex design is required in which appropriate clearance is provided with consideration of displacement due to the thermal expansion, and in which thermal stress is adequately considered.

Furthermore, in the joint section where the gas guide sleeve 10 and the turbine nozzle 4 are in close contact, although it is designed with consideration of thermal expansion, since the thermal expansion in the circumference direction is non-uniform, there are also instances of gas leakage, although only rarely.

US 4184812 A discloses a turbocharger of an axial-flow type that is constructed such that, in operation, a shaft output obtained from expansion of exhaust gas introduced into a turbine rotates a compressor on the same shaft. The turbocharger has a two-piece construction gas inlet casing in which an inside casing and an outside casing are joined together in one piece by means of bolts provided at an axial end of the gas inlet casing such that the inside casing can be disassembled and assembled from the outside casing in the axial or shaft direction. A cavity is formed between the two casings and becomes an exhaust gas pathway for guiding the exhaust gas into a turbine nozzle which is fixedly mounted to the inner casing by means of bolts.

A second problem is that since a long volute inner casing is required in order to form an exhaust gas pathway, the inner and outer casings are two-piece, which increases the weights of the inlet casing and the whole turbocharger. Such an increase in weight causes problems in that it is difficult to handle the turbocharger, and there is a disadvantage in the cost.

The present invention has been made in view of the above circumstances, and therefore has an object to provide a turbocharger in which maintainability is ensured by simply attaching and detaching the inner casing, and the problem of thermal expansion, which causes difficulty in design, and the problem of an increase in weight, are solved.

The present invention adopts the features of claim 1 in order to solve the above problems.

A turbocharger according to the present invention is an axial-flow type turbocharger that is constructed such that a shaft output obtained from expansion of exhaust gas introduced into a turbine rotates a compressor on the same shaft, wherein there is provided a two-piece construction gas inlet casing, in which separate components of an inside or inner casing and an outside or outer casing are joined together in one piece, and a cavity formed between the two casings becomes an exhaust gas pathway, which guides the exhaust gas into a turbine nozzle, and the exhaust gas pathway is formed in a full circle in a direction of rotation of the turbine, and the inner casing can be disassembled and assembled in the shaft direction.

According to such a turbocharger, since it is provided with a two-piece construction gas inlet casing, in which separate components, namely an inner casing and an outer casing, are joined together in one piece, the cavity formed between the two casings becomes an exhaust gas pathway, which guides the exhaust gas into a turbine nozzle, the exhaust gas pathway is formed in a full circle in the direction of rotation of the turbine, and the inner casing can be assembled and disassembled in the shaft direction. Therefore the inner casing and the outer casing, which form the exhaust gas pathway, are thermally influenced almost equally from the exhaust gas, so that no great difference in temperature occurs between the two casings.

Furthermore, since the exhaust gas pathway is formed in a full circle in the direction of rotation of the turbine, there is no superfluous casing component, and therefore the gas inlet casing can be lightened.

In the above turbocharger, it is preferable that a nozzle ring forming the turbine nozzle is constructed such that a diameter of an inner peripheral surface of an outer ring on a gas inlet side expands in a funnel shape, and an inner peripheral surface of the outer casing and an outer peripheral surface of a gas inlet side end of the nozzle ring are fitted together. As a result, it is possible to improve the sealing of the exhaust gas, and the exhaust gas directed towards the turbine nozzle flows in smoothly.

In the above turbocharger, it is preferable that the exhaust gas pathway is divided into two in the circumferential direction by a partition panel provided in the shaft direction of the turbine. As a result, it is possible to prevent circulation from occurring in the flow of the exhaust gas in front of the nozzle ring inlet. In this case, it is preferable that the partition panel is provided at a location that divides the circumference direction into two semicircles.

In the above turbocharger, it is preferable that a gas guide sleeve and the turbine nozzle are connected together in a socket-and-spigot structure, in which the ends of the two are fitted together. As a result, the sealing of the joined parts is improved, making it difficult for the gas to leak, and the socket-and-spigot section becomes a guide, which improves the operability of assembly and disassembly. This socket-and-spigot structure is possible since the expansion due to heat in the diameter direction is equal due to the two-part casing structure, where there is no great difference in temperature between the inner and outer casings.

According to the abovementioned turbocharger of the present invention, in a two-piece construction gas inlet casing with superior maintainability, the relative temperature difference occurring between the inner casing and the outer casing due to the thermal influence of the exhaust gas is reduced. Therefore the difference in thermal expansion between the two casings is also reduced significantly to be less than conventionally. Consequently, the thermal stress acting on the components of the turbocharger is reduced, making it easy to maintain appropriate clearance. Accordingly, in the turbocharger of the present invention, there are significant effects of easing the design difficulties caused by considering differences in thermal expansion, and of improving performance and reliability.

Moreover, since the exhaust gas pathway is formed in a full circle, which eliminates any superfluous casing component, it is possible to lighten the gas inlet casing. As a result, the weight of the whole turbocharger is reduced, making it easy to handle, and there is also an advantage in the cost.

Furthermore, by adopting a construction in which the diameter of the end inner peripheral surface on the gas inlet side is expanded in a funnel shape, and the inner peripheral surface of the outer casing and the end outer peripheral surface on the gas inlet side of the nozzle ring are fitted together, it is possible to improve the sealing of the exhaust gas, and make the exhaust gas directed toward the turbine nozzle flow in smoothly. Therefore, significant effects of further improving the performance and reliability of the turbocharger can be obtained.

Moreover, since the joint section of the turbine nozzle and the gas guide sleeve is a socket-and-spigot structure, significant effects can be obtained in that the sealing is improved by the fitting, making it difficult for gas to leak, and the socket-and-spigot section becomes a guide, which also improves the operability of assembly and disassembly.

### Brief Description of Drawings

FIG. 1 is a partial cross-sectional block diagram showing, as an embodiment according to a turbocharger of the present invention, an example of the internal structure on the turbine side in cross-section.
FIG. 2 is an enlarged diagram of the main parts of FIG. 1.
FIG. 3 is a sectional view of the turbine side showing a state in which the inner casing is removed from the turbocharger of FIG. 1.
FIG. 4 is a first modified example of the turbocharger shown in FIG. 1, wherein (a) is a cross-sectional diagram showing a structural example of the main parts, and (b) is a sectional view through A-A.
FIG. 5 is a second modified example of the turbocharger shown in FIG. 1, wherein (a) is a cross-sectional diagram showing a structural example of the main parts, and (b) is a sectional view through B-B.
FIG. 6 is a sectional view of the turbine side, illustrating a conventional example of a turbocharger.

Best Mode for Carrying Out the Invention Hereunder is a description of a first embodiment of a turbocharger according to the present invention, based on the drawings.

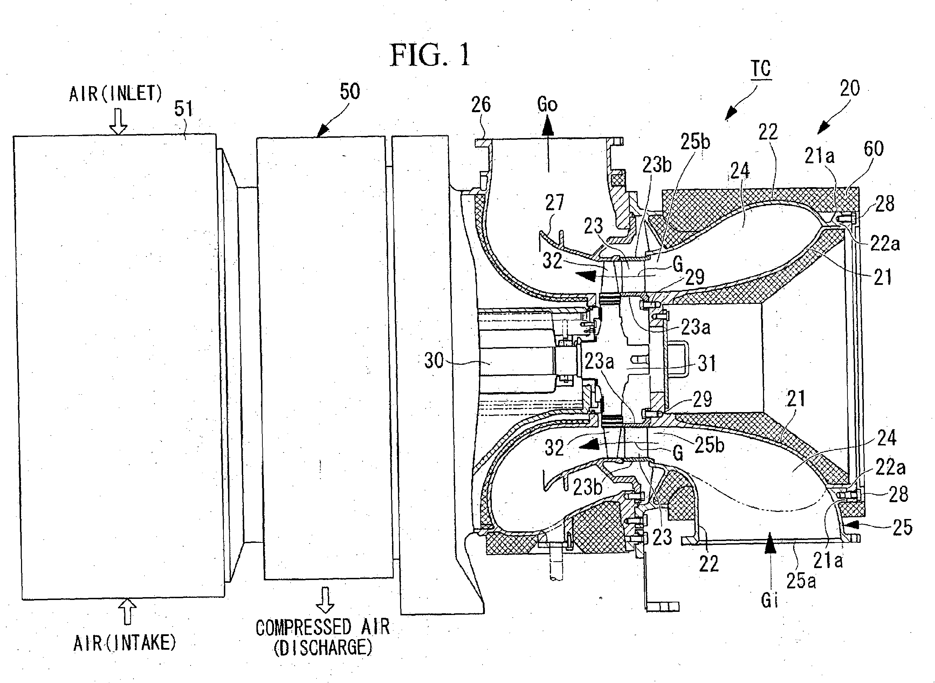

FIG. 1 is a partial cross-sectional block diagram showing an example of the internal structure on the turbine side in cross-section, for a turbocharger TC for a large internal combustion engine, in which a turbine and a compressor are installed on the same shaft.

The turbocharger TC is of an axial flow type, which is constructed such that the shaft output obtained from the expansion of exhaust gas from an internal combustion engine introduced into an axial-flow turbine 20 rotates a compressor 50 on the same shaft to supply air that has been compressed to a high density to the internal combustion engine. The part shown by cross-hatching in the figure is an insulating material 60, which is provided for the purposes of thermal insulation and soundproofing.

The axial-flow turbine 20 is provided with a gas inlet casing 25, which is constructed such that separate components, namely an inner casing 21 and an outer casing 22, are joined together in one piece by bolted joints, and a cavity formed between the two casings 21 and 22 becomes an exhaust gas pathway 24 for guiding the exhaust gas into a turbine nozzle 23.

In the gas inlet casing 25 with such a two-piece construction, the exhaust gas pathway 24 is formed in a full circle in the direction of rotation of the axial-flow turbine 20, and the exhaust gas, which is introduced from a gas inlet 25a of the gas inlet casing 25 as shown by the arrow Gi in the figure, after being guided into a gas outlet 25b through the exhaust gas pathway 24, is discharged outside from the exit of the gas outlet casing 26 as shown by the arrow Go in the figure. Furthermore, the abovementioned gas outlet 25b is provided with an aperture such that it supplies exhaust gas to the turbine nozzle 23 in a full circle in the direction of rotation. Reference number 27 in the figure denotes a gas guide sleeve provided on the downstream side of turbine rotating blades 32.

Moreover, the axial-flow turbine 20 is constructed such that numerous turbine rotating blades 32 are installed on a rotor disk 31 provided on one end of a rotor shaft 30, around the circumference direction. The turbine rotating blades 32 are provided close to the downstream side, which is the exit of the turbine nozzle 23, and high temperature exhaust gas, which is discharged from the turbine nozzle 23, flows as shown by the arrow G in the figure. Therefore, the exhaust gas rotates the rotor disk 31 and a rotor shaft 30 by passing through the turbine rotating blades 32 and expanding.

In the abovementioned gas inlet casing 25 with a two-piece construction, one end of the inner casing 21 is fixed for support to one end of the outer casing 22 by bolted joints. That is, the inner casing 21 has a flange face 22a formed on the casing end part on the opposite side from the rotor disk 31, being on the right side of the page, the flange face 22a is laid on a flange face 21a of the inner casing 21 provided facing it, and they are fixed for support by being joined together in this state using bolts 28. The two flange faces 21a and 22a are perpendicular to the shaft direction of the rotor shaft 30, which rotates together with the rotor disk 31.

Furthermore, the internal circumference side 23a of a ring member (nozzle ring), which forms the turbine nozzle 23, is joined on the other end (rotor disk side end part) of the inner casing 21 by bolts 29. Usually the ring member forming the turbine nozzle 23 is a two-piece ring construction, in which a partition member connects the ring members of the inner peripheral side 23a and the outer peripheral side 23b with a predetermined spacing.

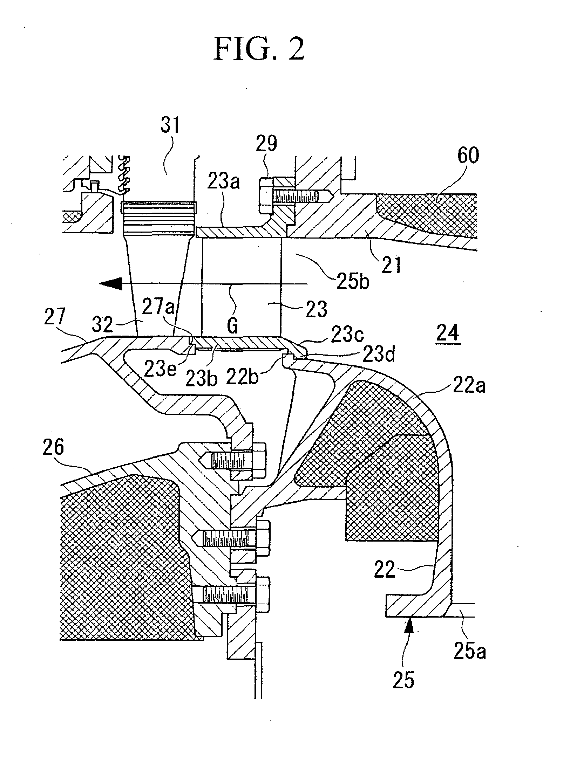

On the other hand, regarding the outer peripheral side 23b of the nozzle ring forming the turbine nozzle 23, the diameter of the end part internal peripheral surface 23c of the gas inlet side (gas outlet 25b side) is expanded in a funnel shape as shown in the enlarged diagram of the main parts of FIG. 2. Moreover, the rotor disk side end part of the outer casing 22 is constructed such that a stepped part 22b is provided by bending the inner peripheral surface 22a in the rotor shaft direction, and the stepped part 22b and a stepped part 23d provided in the gas inlet side end part outer peripheral surface of the nozzle ring are fitted together so as to engage in the axial direction.

Furthermore, the gas guide sleeve 27 is joined to the end part, being the gas outlet side (turbine rotating blade 32 side) of the outer peripheral side 23b of the turbine nozzle 23. The joint section is a socket-and-spigot structure, in which the end parts of the turbine nozzle 23 and the gas guide sleeve 27 are fitted together.

To describe the joint section specifically, it is a socket-and-spigot structure, in which a stepped fitting part 23e of the nozzle ring and a stepped fitting part 27a of the gas guide sleeve 27 are fitted together as shown in FIG. 2 for example. In this case, a socket-and-spigot structure is used in which the stepped fitting part 23e formed by machining the outer periphery of the tip end on the ring side is inserted into the inside of the stepped fitting part 27a formed by machining the inner periphery of the tip end on the gas guide sleeve 27.

In the turbocharger TC with the above-described construction, when exhaust gas is introduced to operate the turbocharger, the exhaust gas introduced from the gas inlet 25a of the gas inlet casing 25 passes through the exhaust gas pathway 24 and is guided through to the gas outlet 25b. Since the exhaust gas is drawn in to the turbine nozzle 23 from the gas outlet 25b, which is open in a full circle in the direction of rotation, and expands when it passes through the turbine rotating blades 32, rotating the rotor disk 31 and the rotor shaft 30, it drives the compressor 50 on the same shaft to compress the air to be supplied to the internal combustion engine. The air compressed by the compressor 50 is sucked in through a filter 51. The exhaust gas expanded by the turbine rotating blades 32 flows outside guided by the gas outlet guide sleeve 27 and the gas outlet casing 26.

In the gas inlet casing 25 with a two-piece construction, which forms such an exhaust gas pathway, since the exhaust gas flows in direct contact with the inner casing 21 and the outer casing 22, there is no difference between the two casings in regard to the thermal influence from the exhaust gas. Therefore, there is no great difference in the thermal expansion between the two casings, and the thermal stress acting on the components of the axial-flow turbine 20 is reduced, making it easy to maintain the appropriate clearance in the turbine. Accordingly, in the axial-flow turbine 20 and the supercharger TC, design difficulties caused by considering differences in thermal expansion are eased, and furthermore the performance and reliability are improved.

Moreover, in a two-piece construction in which there is no great difference in temperature between the inner and outer casings 21 and 22, thermal expansion in the radial direction is equalized. Therefore the abovementioned socket-and-spigot structure of the turbine nozzle 23 and the gas guide sleeve 27 is possible. In such a socket-and-spigot structure, not only is the sealing of the joined parts improved, enabling the gas to be prevented from leaking, but also the socket-and-spigot section becomes a guide, simplifying the operation when assembling and disassembling the axial-flow turbine 20 for maintenance or the like.

Furthermore since the exhaust gas pathway 24 with a two-piece construction is formed in a full circle in the direction of rotation of the turbine, and there is no superfluous component in either the inner casing 21 or the outer casing 22, it is also possible to lighten the gas inlet casing 25.

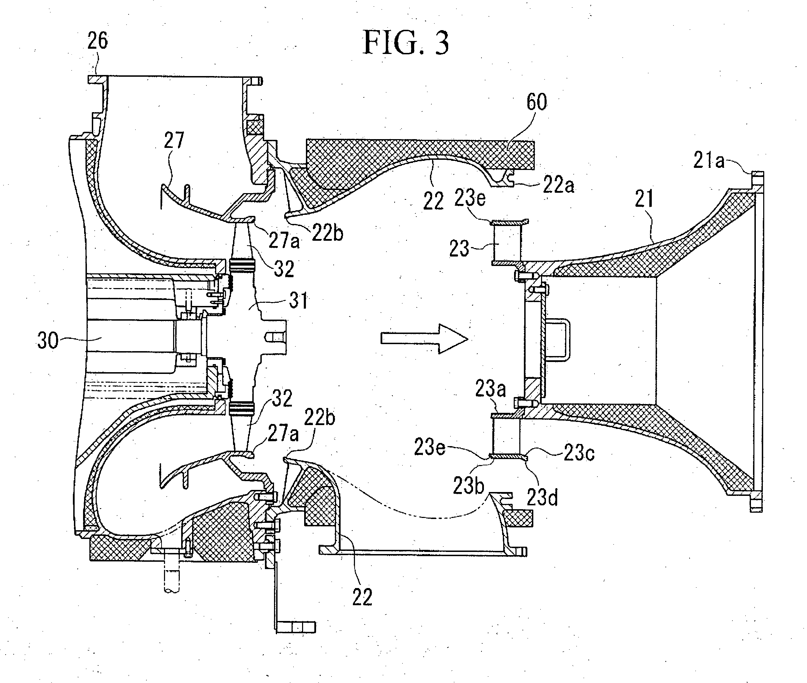

Moreover, the abovementioned outer inlet casing 25 is constructed such that the inner casing 21 can be attached and detached in the axial direction on its own, that is independently from the outer casing 22, by fastening and unfastening the bolts 28 as shown in FIG. 3. Therefore, for example in the case of performing internal inspection, or performing foreign object removal, or the like in the gas outlet casing 26 or the gas outlet guide sleeve 27, it is not necessary to perform a troublesome operation such as removing the rotor shaft 30. Hence maintainability is excellent.

Furthermore, since the turbine nozzle 23 has an end inner peripheral surface 23c whose diameter is expanded in a funnel shape, a comparatively smooth pathway is formed, in which there is no sudden change in the cross-sectional area of the pathway, and no great step difference, so that the exhaust gas flows to the turbine nozzle 23 from the gas outlet 25b smoothly. Moreover, since a joining structure is used between the outer casing 22 and the turbine nozzle 23 in which the stepped parts 22b and 23d are engaged, the sealing of the exhaust gas flowing into the turbine nozzle 23 from the gas outlet 25b is improved in the joined parts.

As described above, when introducing the exhaust gas from the gas inlet casing to the turbine nozzle, since the conventional structure in which exhaust gas is drawn in around a semicircle is changed to a structure in which it is drawn in from a full circle, the relative temperature difference occurring between the inner casing 21 and the outer casing 22 is reduced, and the difference in thermal expansion between the two casings 21 and 22 is also reduced significantly to be negligible. Therefore, control of the thermal stress and the clearance is simplified, the design difficulties caused by considering differences in thermal expansion are eased, and furthermore the performance and reliability are improved, such as the improvement in the sealing of the joint section of the gas guide sleeve 27.

Moreover, since the exhaust gas pathway 24 is formed in a full circle, any superfluous casing component is eliminated. As a result, it is possible to lighten the gas inlet casing 25. Accordingly, handling is made easy due to the reduction in weight of the turbocharger TC, and there is also an advantage in the cost.

That is, by making the gas inlet casing 25 of the abovementioned turbocharger TC a two-piece structure comprising inner and outer casings similar to in the conventional type, and forming the exhaust gas pathway 24 between the inner and outer casings 21 and 22 while maintaining the design such that only the inner casing 21 can be assembled and disassembled, the temperature difference between the two casings is eliminated, and also the weight is reduced.

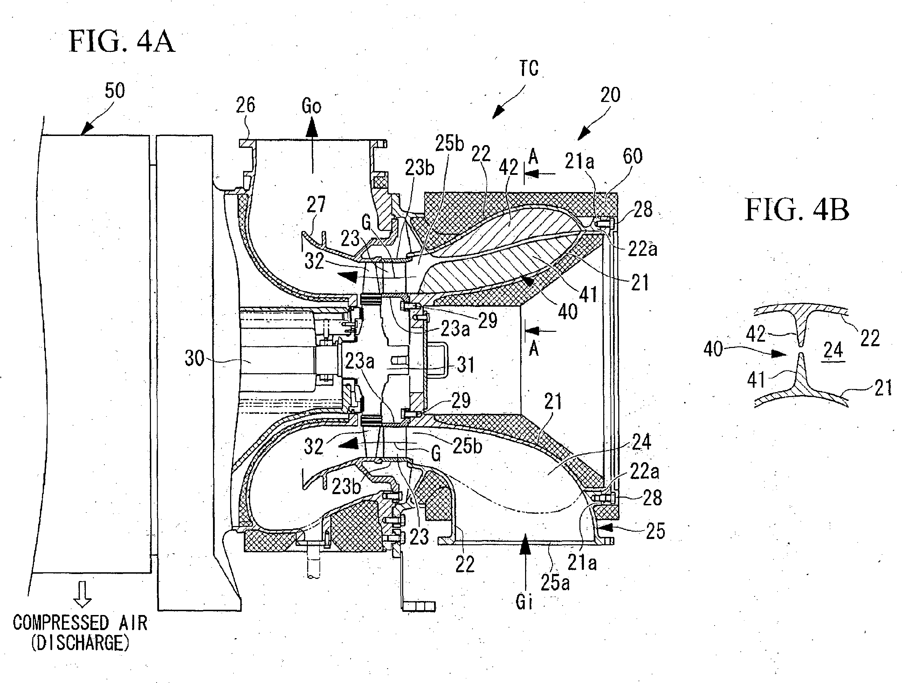

Moreover, the construction may be such that the exhaust gas pathway 24 is divided into two in the circumference direction by a separating wall 40 provided in the shaft direction of the turbine as in a first modified example shown in FIG. 4.

The separating wall 40 of the first modified example shown in FIG. 4 is formed by combining a pair of integrated partitions 41 and 42 formed such that they protrude from the inner casing 21 and the outer casing 22 respectively. In the assembled state of the gas inlet casing 25, the separating wall 40, which is formed such that the tip ends of the two partition panels 41 and 42 are almost in contact, divides the circumference direction of the exhaust gas pathway 24 into two. In this case, it is preferable that the separating wall 40 is provided at a location 180 degrees, which is a semicircle, away from the center of the gas inlet 25a.

As a result, the exhaust gas introduced from the gas inlet 25a into the exhaust gas pathway 24, which is divided into two by the separating wall 40, is split into two branches that both head towards the separating wall 40, guided toward the gas outlet 25b, and drawn into the turbine nozzle 23 from around a full circle of the exhaust gas pathway 24. Therefore, it is possible to prevent circulation, which causes the performance to deteriorate, from occurring in the flow of the exhaust gas in front of the inlet, being the upstream side of the nozzle ring, and accordingly it is possible to obtain a higher performance turbocharger TC.

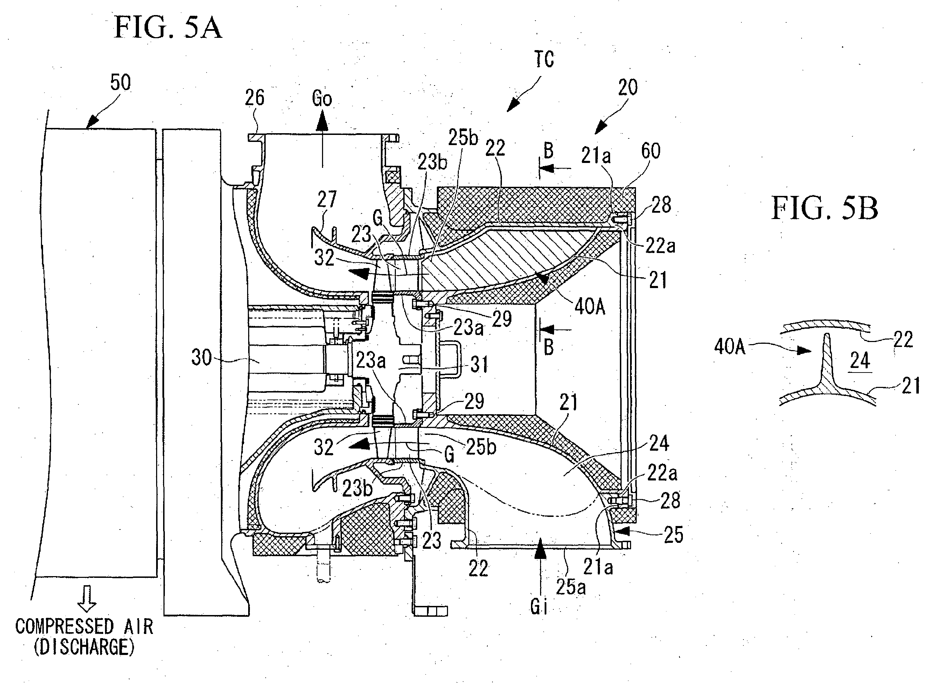

Furthermore, the construction may be such that the exhaust gas pathway 24 is divided into two in the circumference direction by a separating wall 40A provided in the shaft direction of the turbine as in a second modified example shown in FIG. 5. The separating wall 40A in this case protrudes only from the inner casing 21 toward the outer casing 22, and the tip is formed such that it does not exceed the maximum outer diameter of the joining part of the inner casing 21, so that it is possible to prevent circulation from occurring in the flow of the exhaust gas, and obtain a higher performance turbocharger TC, similarly to the abovementioned first modified example.

## Claims

1. A turbocharger (TC) of an axial-flow type that is constructed such that, in operation, a shaft output obtained from expansion of exhaust gas introduced into a turbine (20) rotates a compressor (50) on the same shaft (30), wherein
there is provided a two-piece construction gas inlet casing (25), in which separate components of an inside casing (21) and an outside casing (22) are joined together in one piece, and a cavity formed between the two casings (21,22) becomes an exhaust gas pathway (24) for guiding said exhaust gas into a turbine nozzle (23),
said exhaust gas pathway (24) is formed in a full circle in a direction of rotation of the turbine (20),
said inside casing (21) and said outside casing (22) are joined together such that said inside casing (21) can be disassembled and assembled in the shaft direction, and
a rotor disk side end part of said outside casing (22) is fitted together with a gas inlet side end part of a nozzle ring forming said turbine nozzle (23) so as to engage in the axial direction.

2. A turbocharger (TC) according to claim 1, wherein the nozzle ring forming the turbine nozzle (23) is constructed such that a diameter of an inner peripheral surface (23c) of an outer ring on the gas inlet side expands in a funnel shape, and an inner peripheral surface of said outside casing (22) and an outer peripheral surface of the gas inlet side end of said nozzle outer ring are fitted together.

3. A turbocharger (TC) according to either one of claim 1 and claim 2, wherein said exhaust gas pathway (24) is divided into two in the circumferential direction by a partition panel (40;40A) provided in the shaft direction of the turbine (20).

4. A turbocharger (TC) according to any one of claim 1 through claim 3, wherein a gas guide sleeve (27) and said turbine nozzle (23) are connected together in a socket-and-spigot structure, in which end parts of the two are fitted together.

## Patentansprüche

1. Ein Turbolader (TC) eines Axialströmungstyps, der so aufgebaut ist, dass im Betrieb eine Wellenausgabe, die aus einer Expansion von in eine Turbine (20) eingeführtem Abgas erhalten wird, einen Kompressor (50) auf derselben Welle (30) rotiert, wobei
ein Gaseinlassgehäuse (25) in zweiteiliger Konstruktion vorgesehen ist, in dem separate Komponenten eines innenseitigen Gehäuses (21) und eines außenseitigen Gehäuses (22) miteinander zu einem Teil verbunden sind, und ein zwischen den beiden Gehäusen (21,22) ausgebildeter Hohlraum ein Abgasweg (24) zum Leiten des Abgases in eine Turbinendüse (23) wird,
der Abgasweg (24) in einem vollständigen Kreis in einer Rotationsrichtung der Turbine (20) ausgebildet ist,
das innenseitige Gehäuse (21) und das außenseitige Gehäuse (22) miteinander so verbunden sind, dass das innenseitige Gehäuse (21) in der Wellenrichtung auseinandergebaut und zusammengebaut werden kann, und
ein rotorscheibenseitiges Endteil des außenseitigen Gehäuses (22) mit einem gaseinlassseitigen Endteil eines Düsenrings, welcher die Turbinendüse (23) bildet, so zusammengesetzt ist, dass sie in der Axialrichtung in Eingriff gelangen.

2. Ein Turbolader (TC) gemäß Anspruch 1, wobei der die Turbinendüse (23) bildende Düsenring so aufgebaut ist, dass ein Durchmesser einer Innenumfangsfläche (23c) eines Außenrings an der Gaseinlassseite sich in einer Trichterform erweitert, und eine Innenumfangsfläche des außenseitigen Gehäuses (22) und eine Außenumfangsfläche des gaseinlassseitigen Endes des Düsen-Außenrings zusammengesetzt sind.

3. Ein Turbolader (TC) gemäß Anspruch 1 oder Anspruch 2, wobei der Abgasweg (24) in zwei in der Umfangsrichtung durch eine Trennplatte (40;40A) unterteilt ist, welche in der Wellenrichtung der Turbine (20) vorgesehen ist.

4. Ein Turbolader (TC) gemäß einem der Ansprüche 1 bis 3, wobei eine Gasleithülse (27) und die Turbinendüse (23) in einer Muffenverbindungsstruktur verbunden sind, in der Endteile der beiden zusammengesetzt sind.

## Revendications

1. Turbocompresseur (TC) du type à flux axial qui est réalisé de sorte que, en fonctionnement, une sortie d'arbre obtenue à partir de l'expansion de gaz d'échappement introduit dans une turbine (20) met en rotation un compresseur (50) sur le même arbre (30), dans lequel
il est prévu un carter (25) d'entrée de gaz ayant une structure à deux pièces, dans lequel des composants distincts d'un carter (21) intérieur et d'un carter (22) extérieur sont réunis ensemble en une seule pièce, et une cavité formée entre les deux carters (21, 22) devient un trajet (24) de gaz d'échappement pour le guidage du gaz d'échappement dans une tuyère (23) de turbine,
le trajet (24) de gaz d'échappement est formé suivant un cercle complet dans une direction de rotation de la turbine (20),
le carter (21) intérieur et le carter (22) extérieur sont réunis ensemble de sorte que le carter (21) intérieur peut être désassemblé et assemblé dans la direction de l'arbre, et
une partie d'extrémité latérale de disque de rotor du carter (22) extérieur est adaptée ensemble avec une partie d'extrémité latérale d'entrée de gaz d'une bague de tuyère formant la tuyère (23) de turbine de manière à s'engager dans la direction axiale.

2. Turbocompresseur (TC) suivant la revendication 1, dans lequel la bague de tuyère formant la tuyère (23) de turbine est réalisée de sorte qu'un diamètre d'une surface (23c) périphérique intérieure d'une bague extérieure sur le côté d'entrée de gaz s'étend sous la forme d'un entonnoir, et une surface périphérique intérieure du carter (22) extérieur et une surface périphérique extérieure de l'extrémité latérale d'entrée de gaz de la bague extérieure de tuyère sont adaptées l'une à l'autre.

3. Turbocompresseur (TC) suivant l'une ou l'autre des revendications 1 et 2, dans lequel le trajet (24) de gaz d'échappement est divisé en deux dans la direction circonférentielle par un panneau (40, 40a) de séparation disposé dans la direction de l'arbre de la turbine (20).

4. Turbocompresseur (TC) suivant l'une quelconque des revendications 1 à 3,
dans lequel un manchon (27) de guidage de gaz et la tuyère (23) de turbine sont reliés ensemble suivant une structure à douille et tourillon, dans laquelle des parties d'extrémité des deux sont adaptées ensemble.
